# EUROPÄISCHE PATENTSCHRIFT

(11) **EP 2 243 581 B1**
(45) Veröffentlichungstag und Bekanntmachung des Hinweises auf die Patenterteilung: **18.10.2017**
(21) Anmeldenummer: 10001640.1
(22) Anmeldetag: 18.02.2010
(51) Int. Cl.: B23D 51/18, F16J 1/00

(54) **Handwerkzeug mit einem Linear-Schwingantrieb**
Hand tool with a linear oscillating drive
Outil manuel doté d'un entraînement d'oscillation linéaire

(30) Priorität: 22.04.2009 DE 102009019081
(43) Veröffentlichungstag der Anmeldung: 27.10.2010
(73) Patentinhaber: BIAX Maschinen GmbH, 8212 Neuhausen am Rheinfall (CH)
(72) Erfinder: Baumann, Marco, 78239 Worblingen (DE)
(74) Vertreter: DREISS Patentanwälte PartG mbB

(56) Entgegenhaltungen:
- EP-A2- 0 284 772
- WO-A1-99/20424
- BE-A- 509 458
- FR-A1- 2 635 365
- US-A- 3 150 570
- US-A- 3 745 890
- US-A- 3 902 405

## Beschreibung

Die vorliegende Erfindung betrifft ein Handwerkzeug mit einem pneumatisch betriebenen Linear-Schwingantrieb nach dem Oberbegriff des Anspruchs 1. Ein solches Handwerkzeug ist aus der EP 1 028 826 B1 bekannt.

Der pneumatisch betriebene Linear-Schwingantrieb des bekannten Handwerkzeugs weist ein Motorengehäuse und einen in dem Motorengehäuse beweglichen Kolben auf, der zwei Arbeitsräume des Motorengehäuses voneinander trennt und der ein zu einem der beiden Arbeitsräume weisendes Kolbenhemd aufweist. Über eine Druckluftzuleitung zu dem Motorengehäuse und einen Steuerschieber wird eine Zufuhr der Druckluft zu beiden Arbeitsräumen gesteuert. Die Druckluftzufuhr erfolgt so, dass der Kolben abwechselnd in die eine und die andere Richtung angetrieben wird und damit eine oszillierende Hin- und Herbewegung ausführt. Über eine Abluftöffnung im Motorengehäuse werden die beiden Arbeitsräume jeweils entlüftet.

Der Kolben treibt über eine Kolbenstange ein oszillierendes Werkzeug an, beispielsweise ein Sägeblatt oder ein Feilwerkzeug. Nach der EP 1 028 826 B1 ist der Kolbenboden dünnwandig und bombiert und geht an seiner Peripherie in eine dünnwandige zylindrische Hülse über, um die Masse des Kolbens und damit auch zu tilgende Reaktionskräfte bei seiner oszillierenden Bewegung gering zu halten. Eine solche dünnwandige zylindrische Hülse wird in der vorliegenden Anmeldung auch als Kolbenhemd bezeichnet. Die das Kolbenhemd bildende zylindrische Hülse und der Kolbenboden bilden einen Kolbentopf, dessen Innenseite dem einen der beiden Arbeitsräume zugewandt ist. Mit anderen Worten: Ein in Bewegungsrichtung des Kolbens vollzogener Schnitt durch die Kolbenmitte ergibt einen U-förmigen Querschnitt, wobei die beiden U-Schenkel zu einem der Arbeitsräume weisen.

Mit einem solchen Handwerkzeug wird letztlich in der Druckluft gespeicherte Energie in mechanische Arbeit umgewandelt. Um bei gegebenen Abmessungen und gegebenen Drücken möglichst große Kräfte erzeugen zu können und um die mit der Erzeugung der Druckluft verbundene Energie möglichst weitgehend in mechanische Energie umwandeln zu können, ist man allgemein an einem guten Wirkungsgrad pneumatischer Linear-Schwingantriebe interessiert. Unter konstanten pneumatischen Bedingungen wie Druck und Durchfluss steigt zum Beispiel die Schnittleistung einer mit dem Linear-Schwingantrieb angetriebenen Säge mit verbessertem Wirkungsgrad an.

Doppelkolben mit dehnbaren Kolbenhemden oder Dichtlippen sind aus den Druckschriften US 3,745,890 A, US 3,902,405 A, FR 2 635 365 A1, EP 0 284 772 A2, US 3,150,570 A und BE 509 458 A für verschiedene pneumatische und hydraulische Anwendungen wie hydraulische Rammen, Druckluftzylinder in der Lebensmittelindustrie, und für einen Trockenlauf geeignete Anwendungen, für Anwendungen in Verbindung mit dehnbaren Zylinderwänden in Stellgliedern von Flugzeugen bekannt.
Vor diesem Hintergrund besteht die Aufgabe der Erfindung in der Angabe eines Handwerkzeuges mit einem pneumatischen Linear-Schwingantrieb mit einem verbesserten Wirkungsgrad.
Diese Aufgabe wird bei einem Handwerkzeug der eingangs genannten Art mit den Merkmalen des Anspruchs 1 gelöst.
Die Erfindung basiert auf der Erkenntnis, dass sich das dünnwandige Kolbenhemd unter der Einwirkung der Druckluft radial dehnt, was zu einer verbesserten Abdichtung des Ringspaltes zwischen Kolben und Motorengehäuse führt. Je besser die Abdichtung ist, desto größer ist die Druckdifferenz zwischen den beiden Arbeitsräumen und damit auch die resultierende Kraft. Durch die Erfindung wird die verbesserte Abdichtung sowohl bei einer Vorwärtsbewegung als auch bei einer Rückwärtsbewegung des Kolbens erzielt. Dadurch wird insbesondere bei beiden Bewegungsrichtungen der Kolbenstange die gleiche Kraft erzeugt. Dadurch, dass sich der Kolbendurchmesser nicht nur im Bereich der Kolbentopföffnung, sondern zusätzlich im Bereich des Kolbenbodens dehnen kann, wird die Abdichtung zusätzlich verbessert.
Weitere Vorteile ergeben sich aus den abhängigen Ansprüchen, der Beschreibung und den beigefügten Figuren.

### Zeichnungen

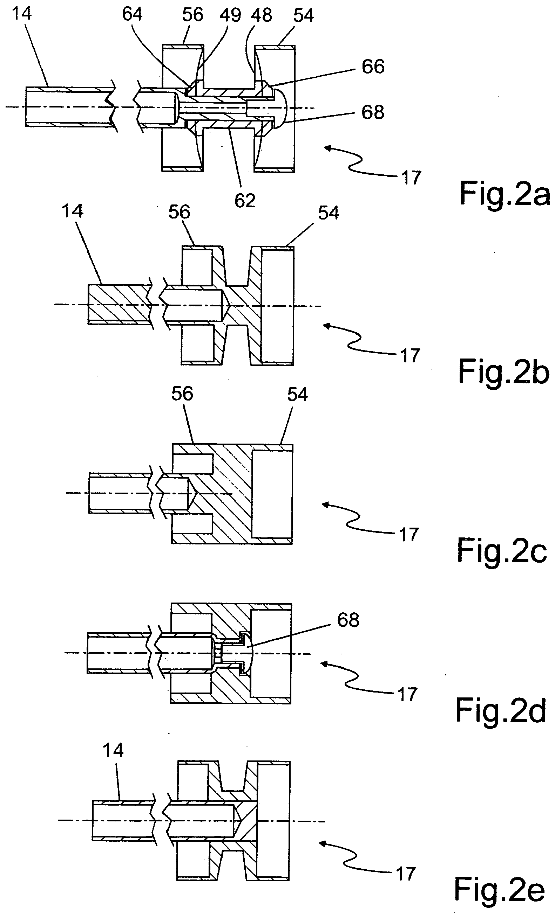

Ein Ausführungsbeispiel der Erfindung ist in der Figur 2a dargestellt und wird in der nachfolgenden Beschreibung näher erläutert. Dabei zeigen, jeweils in schematischer Form:
- Fig. 1: ein Ausführungsbeispiel eines Handwerkzeugs; und
- Fig. 2: alternative Ausgestaltungen eines Doppelkolbens als Bestandteil eines solchen Handwerkzeugs.

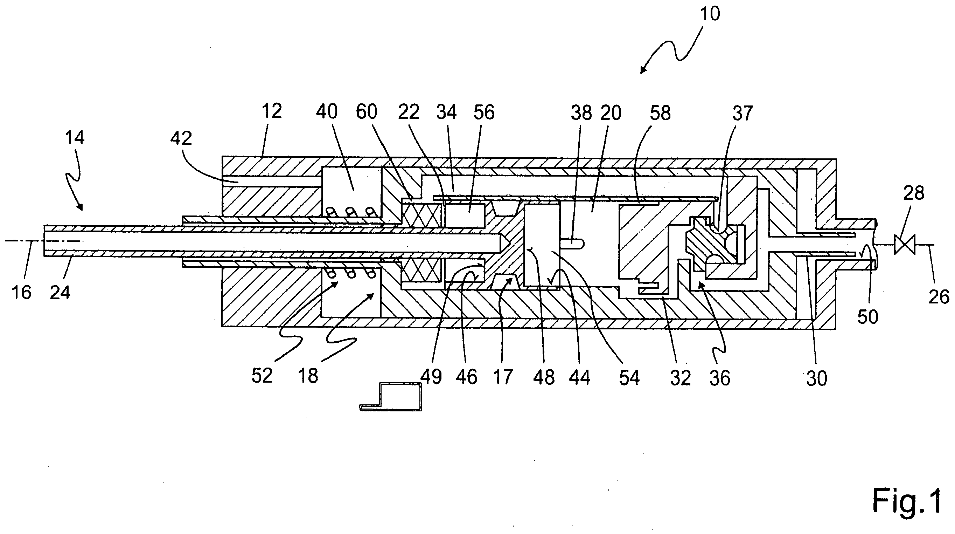

Im Einzelnen zeigt die Fig. 1 ein Handwerkzeug 10 mit einem Griffkörper 12 und einer Kolbenstange 14, die entlang einer Achse 16 beweglich in dem Griffkörper 12 gelagert ist.

Die Kolbenstange 14 ist starr mit einem Kolben 17 verbunden, der in einem Motorengehäuse 18 innerhalb des Griffkörpers 12 in Richtung der Achse 16 beweglich gelagert ist und der einen ersten Arbeitsraum 20 von einem zweiten Arbeitsraum 22 des Motorengehäuses 18 beweglich voneinander trennt. Jeder der beiden Arbeitsräume 20, 22 wird für sich betrachtet abwechselnd mit Druckluft befüllt und entlüftet, wobei die Befüllung beider Arbeitsräume 20, 22 jeweils im Wechsel zueinander erfolgt.

Bei einer Befüllung des ersten Arbeitsraums 20 ergibt sich eine resultierende Druckkraft auf den Kolben 16, mit der die Kolbenstange 14 aus dem Griffkörper 12 heraus getrieben wird. Bei einer Befüllung des zweiten Arbeitsraums 22 mit Druckluft wird die Kolbenstange 14 dagegen in den Griffkörper hinein gezogen. Das Motorengehäuse 18 mit dem unter dem Einfluss der Druckluft hin und her laufenden Kolben 17 und der damit starr gekoppelten Kolbenstange 14 stellt damit einen Linear-Schwingantrieb dar. Das vom Griffkörper 12 abgewandte Ende 24 der Kolbenstange 14 dient zur Befestigung eines Werkzeuges, beispielsweise eines Schabers, eines Meißels, eines Sägeblatts, eines Messers oder eine Feilenblatts, wobei diese Aufzählung nicht abschließend ist.

Das Handwerkzeug 10 weist einen Druckluftanschluss 26 mit einem Druckluftsteuerventil 28 auf, mit dem ein Strom von Druckluft in die Arbeitsräume 20, 22 steuerbar ist. Das Druckluftsteuerventil 28 wird von einem nicht dargestellten Betätigungsmittel des Handwerkzeuges 10 betätigt, wie es zum Beispiel in der EP 1 028 826 in der Form eines manuell zu betätigenden Kniehebels offenbart ist.

Die Druckluft tritt über den Druckluftanschluss 26 des Handwerkzeugs 10 und ein Druckluftanschlussstück 30 des Motorengehäuses 18 in das Motorengehäuse 18 ein und strömt je nach Stellung eines Steuerschiebers 36 entweder über einen ersten Druckluftkanal 32 in den ersten Arbeitsraum 20 oder über einen zweiten Druckluftkanal 34 in den zweiten Arbeitsraum 22. In der dargestellten Stellung des Steuerschiebers 36 strömt die Druckluft über den ersten Druckluftkanal 32 in den ersten Arbeitsraum 20 und treibt den Kolben 17 nach links. Dabei läuft der Kolben 17 über eine Abluftöffnung 38 im Motorengehäuse 18, die einen Abluftquerschnitt zum Außenraum außerhalb des Handwerkzeugs 10 darstellt.

Die Entlüftung der Arbeitsräume 20, 22 des Motorengehäuses 18 erfolgt über die Abluftöffnung 38 und einen außerhalb der Zeichnungsebene verlaufenden Abluftkanal in den Außenraum, zum Beispiel auf eine dem oszillierenden Werkzeug abgewandte Seite des Handwerkzeugs. In der Ausgestaltung, die in der Fig. 1 dargestellt ist, erfolgt eine alternative oder ergänzende Entlüftung der Arbeitsräume 20, 22 des Motorengehäuses 18 über die Abluftöffnung 38 und einen außerhalb der Zeichenebene verlaufenden Abluftkanal in ein Abluftvolumen 40 und von dort über einen Ausblaskanal 42 in den Außenraum auf der dem oszillierenden Werkzeug zugewandten Seite des Handwerkzeugs.

In der dargestellten Stellung öffnet der nach links laufende Kolben 17 gerade einen Abluftquerschnitt zur Abluftöffnung 38. Dadurch steigt der Druckluft-Volumenstrom in den ersten Arbeitsraum 20 an. Als Folge ändern sich die Druckverhältnisse am Steuerschieber 36 so, dass dieser nach links gezogen wird und dabei den Durchflussquerschnitt zum ersten Arbeitsraum 20 schließt sowie einen Durchflussquerschnitt zum zweiten Arbeitsraum 22 über die Ringnut 37 im Steuerschieber 36 öffnet.

Die dann in den zweiten Arbeitsraum 22 einströmende Druckluft treibt den Kolben 17 anschließend nach rechts. Der nach rechts laufende Kolben 17 öffnet dann einen Abluftquerschnitt vom zweiten Arbeitsraum zur Abluftöffnung 38, worauf der Steuerschieber 36 wieder auf eine Befüllung des ersten Arbeitsraums 20 umschaltet.

Das Handwerkzeug 10 zeichnet sich dadurch aus, dass der Kolben 17 sowohl ein zu dem ersten Arbeitsraum 20 weisendes erstes Kolbenhemd 44 als auch ein zu dem zweiten Arbeitsraum 22 weisendes zweites Kolbenhemd 46 aufweist.

Bei der Befüllung des jeweiligen Arbeitsraums 20, 22 mit Druckluft dehnt sich das jeweilige dünnwandige Kolbenhemd 44, 46 in radialer Richtung aus und schmiegt sich dadurch eng an die Innenwand des Motorengehäuses 18 an, die eine Lauf- und Dichtfläche für den Kolben 17 bildet. Dieses Anschmiegen verengt den Ringspalt zwischen dem Kolben 17 und dem Motorengehäuse 18 und führt damit zu einer verbesserten Abdichtung zwischen den beiden Arbeitsräumen. Dadurch sinkt die Menge der zwischen dem Kolben 17 und dem Motorengehäuse 18 vom belüfteten zum entlüfteten Arbeitsraum strömenden Druckluft. Als Folge steigt das Druckgefälle zwischen den Arbeiträumen 20, 22 und die Luftverluste sinken. Wegen des größeren Druckgefälles ergibt sich ein größerer Wert der resultierenden Druckkraft, die als Antriebskraft am Werkzeug zur Verfügung steht.

Die verbesserte Abdichtwirkung tritt immer dann auf, wenn der dem jeweiligen Kolbenhemd 44, 46 zugewandte Arbeitsraum 20, 22 mit Druckluft befüllt wird. Im Gegensatz zu dem Stand der Technik weist der erfindungsgemäße pneumatische Linear-Schwingantrieb zusätzlich zu dem ersten Kolbenhemd 44, das dem ersten Arbeitsraum 20 zugewandt ist, das zweite Kolbenhemd 46 auf, das dem zweiten Arbeitsraum 22 zugewandt ist. Dadurch wird die verbesserte Dichtwirkung sowohl in der Hin- als auch in der Herbewegung des Kolbens 17 erzielt. Ein die Effizienz verringerndes Durchströmen von Luft zwischen Kolben 17 und Motorengehäuse 18 bei der Befüllung des zweiten Arbeitsraums 22 mit Druckluft tritt daher bei der Erfindung nur in geringerem Ausmaß auf als beim Stand der Technik.

Eine bevorzugte Ausgestaltung zeichnet sich dadurch aus, dass ein Materialquerschnitt der Kolbenhemden 44, 46 kleiner als ein Materialquerschnitt eines Bodens 48, 49 des Kolbens 17 ist. Dadurch wird die Nachgiebigkeit der Kolbenhemden 44, 46 in radialer Richtung gegenüber einer Ausgestaltung mit überall gleicher Materialstärke wie beim Kolbenboden 48, 49 erhöht, ohne dass die Druckfestigkeit des Kolbenbodens 48, 49 verringert wird. Insgesamt wird damit die Abdichtung zwischen den Arbeitsräumen 20, 22 weiter verbessert.

Bevorzugt ist auch, dass die Kolbenhemden 44, 46 in Bezug auf ihr Material und ihre Dimensionen so an den Betriebsdruck einer Druckluftversorgung des Handwerkzeugs 10 angepasst sind, dass sich die Kolbenhemden 44, 46 unter dem Einfluss der Druckluft elastisch aufweiten.

Durch die elastische Aufweitung wird die angestrebte verbesserte Abdichtung erreicht, ohne dafür eine wesentlich erhöhte Reibung in Kauf nehmen zu müssen, da sich die Aufweitung bei der Entlüftung des betreffenden Arbeitsraums 20, 22 jeweils wieder zurückbildet.

In einer bevorzugten Ausgestaltung bestehen der Kolben 17 und das Motorengehäuse 18 aus metallischen Werkstoffen. Dadurch wird eine hohe Standzeit sowie eine hohe Druckfestigkeit und damit Leistungsfähigkeit des Handwerkzeugs 10 erzielt.

Eine weitere bevorzugte Ausgestaltung zeichnet sich dadurch aus, dass eine Lauffläche des Kolbens 17 und/oder des Motorengehäuses 18 mit einem reibungsvermindernden Material beschichtet ist, oder dass reibungsverminderndes Material in einen metallischen Werkstoff der Lauffläche des Kolbens 17 und/oder des Motorengehäuses 18 eingelagert ist. Durch diese Ausgestaltungen wird die Reibung vermindert, was als erwünschte Folge die Leistung erhöht und den Verschleiß verringert.

Besonders bevorzugt ist, dass die metallischen Werkstoffe Leichtmetall aufweisen oder aus Leichtmetall, insbesondere aus Aluminium bestehen, weil dadurch die Massenkräfte beim Betrieb des Handwerkzeugs 10 auf entsprechend geringe Werte beschränkt bleiben.

Um die Verschleißfestigkeit und damit die Standzeit zu erhöhen zeichnet sich eine weitere bevorzugte Ausgestaltung dadurch aus, dass die Laufflächen hartkoatiert sind.

Alternativ zur einer Ausführung aus Leichtmetall besteht das Motorengehäuse und/oder der Kolben aus Stahl. Die Ausführung des Kolbens aus Stahl ist fertigungstechnisch günstiger, weil sich der für die Dehnbarkeit wichtige dünne Materialquerschnitt der Kolbenhemden aus Stahl vergleichsweise leicht und kostengünstig herstellen lässt. Bei einer Ausführung aus Stahl ist eine gehärtete Oberfläche zur Verschleißminderung günstig.

Besonders bevorzugt ist auch, dass das Motorengehäuse 18 in einem Griffkörper 12 des Handwerkzeuges 10 in der Bewegungsrichtung des Kolbens 17 elastisch beweglich gelagert ist.

Diese Art der Lagerung erlaubt eine gegenphasig zur Schwingung des Kolbens 17 erfolgende Schwingung des Motorengehäuses 18, was zu einer erwünschten Tilgung der Massenkräfte beiträgt.

Der Druckluftanschluss 26 des Handwerkzeuges 10 weist in der dargestellten Ausgestaltung einen Abschnitt 50 auf, der als Führung eines Druckanschlussstücks 30 des Motorengehäuses 18 ausgestaltet ist und in dem das Druckanschlussstück 30 axial beweglich dicht gelagert ist.

Auf den Querschnitt des Druckanschlussstücks 30 innerhalb der Führung 50 wirkt eine Druckkraft, die das Motorengehäuse 18 gegen die Kraft eines elastischen Rückstellelements 52, beispielsweise einer im Abluftvolumen 40 angeordneten Spiralfeder, auslenkt. Diesen Kräften überlagern sich noch die Druckkräfte innerhalb der Arbeitsräume 20, 22. Diese Druckkräfte treiben das Motorengehäuse 18 jeweils in zur Richtung der Kolbenantriebskraft entgegengesetzten Richtung an. Als erwünschte Folge bewegen sich Motorengehäuse 18 und Kolben 17 gegenphasig, was zu einer guten Schwingungstilgung und damit Handhabbarkeit des gesamten Handwerkzeuges 10 führt.

Jedes Kolbenhemd 44, 46 bildet mit dem zugehörigen Kolbenboden einen Kolbentopf 54, 56, so dass der Kolben 17 insgesamt zwei starr miteinander verbundene und zu entgegengesetzten Seiten geöffnete Kolbentöpfe 54, 56 aufweist.

Jeder Kolbentopf 54, 56 weist einen zylinderförmigen Mantel in Form seines Kolbenhemdes 44, 46, einen Topfboden 48, 49 und eine dem Topfboden 48, 49 gegenüberliegende Topföffnung auf. Die Topfböden 48, 49 beider Kolbentöpfe 54, 56 weisen einen festen Abstand voneinander auf und sind zwischen den Topföffnungen angeordnet, so dass sich die Kolbentöpfe 54, 56 in entgegengesetzte Richtungen öffnen.

In einer bevorzugten Ausgestaltung weist der Linear-Schwingantrieb jeweils eine Endlagendämpfung für den Kolben 17 auf. In der Ausgestaltung, die in der Fig. 1 dargestellt ist, ergibt sich diese Endlagendämpfung jeweils dadurch, dass das Motorengehäuse 18 an dem Ende eines Arbeitsraums 20, 22, das dem Kolben 17 gegenüber liegt, jeweils eine ringförmige Nut 58, 60 aufweist, die eine Aufnahme für das Zylindermantel-förmige Kolbenhemd 44, 46 bildet. Die Druckluftkanäle 32, 34 enden jeweils in der ringförmigen Nut 58, 60. Bei der Bewegung des Kolbens 17 nach links läuft das zweite Kolbenhemd 46 in die Nut 60 und sperrt den Druckluftkanal 34 ab. Dadurch wird ein Luftvolumen durch das linke Ende des Motorengehäuses 18 in dem dem zweiten Kolbentopf 56 eingeschlossen. Der weiter nach links laufende Kolben 17 verdichtet dieses Luftvolumen und erzeugt damit eine die weitere Annäherung an eine mögliche mechanische Endlage bremsende, nach rechts auf den Kolben 17 einwirkende Dämpfungskraft. Dies gilt analog für die gleichwirkenden Strukturen des ersten Arbeitsraums 20.

Fig. 2 a zeigt eine erfindungsgemäße Ausgestaltung eines Doppelkolbens 17, der sich aus zwei über ein Distanzstück 62 und Kolbendruckscheiben 64, 66 mit Hilfe einer Schraube 68 mit einer Kolbenstange 14 verschraubten Kolbentöpfen 54, 56 zusammensetzt. Durch die konvexe und dünnwandige Ausgestaltung der Kolbenböden weisen diese einen elastisch variablen Durchmesser auf. Diese Ausgestaltung zeichnet sich dadurch aus, dass sich der Kolbendurchmesser nicht nur im Bereich der Kolbentopföffnung, sondern auch zusätzlich im Bereich des Kolbenbodens dehnen kann, was die Abdichtung zusätzlich verbessert.
Fig. 2b zeigt eine einstückige Alternative eines Doppelkolbens 17, bei denen die Kolbentöpfe 54, 56 zusammen mit der Kolbenstange 14 aus Vollmaterial hergestellt sind. Fig. 2c zeigt ebenfalls eine einstückige Alternative eines Doppelkolbens 17, bei denen die Kolbentöpfe 54, 56 zusammen mit der Kolbenstange 14 aus Vollmaterial hergestellt sind. Diese Ausgestaltung ist insgesamt massiver als die Ausgestaltung nach der Fig. 2b. Ein weiterer Unterschied besteht darin, dass der Zwischenraum zwischen den beiden Kolbenböden mit Vollmaterial ausgefüllt ist, was die träge Masse des Doppelkolbens vergrößert.
Die massivere Ausgestaltung erlaubt einen Verzicht auf Kolbendruckscheiben, wenn der Doppelkolben mit der Kolbenstange 14 verschraubt werden soll. Dies wird durch die Fig. 2d veranschaulicht.
Fig. 2e zeigt eine Ausgestaltung eines mit der Kolbenstange 14 verbundenen Doppelkolbens 17, wobei die Verbindung alternativ durch eine Verschraubung, eine Verklebung, eine Kombination aus einer Verschraubung und einer Verklebung, oder durch eine Pressverbindung erfolgt. Aus Festigkeitsgründen wird für die Pressverbindung eine Ausgestaltung des Doppelkolbens aus Stahl bevorzugt.

Bei jeder Ausgestaltung werden die im Bereich der Kolbenhemden vergleichsweise dünnwandigen und von außen beschichteten Kolbentöpfe jeweils im Betrieb von der Druckluftfüllung der Arbeitsräume radial aufgebläht, was zu der verbesserten Abdichtung des Ringspaltes zwischen Kolbenaußenfläche und Lauf- und Dichtfläche des Motorengehäuses führt. Dies hat den Vorteil einer verbesserten Kompression und Energieübertragung von der Druckluft auf den Kolben. Dieser Abdichtvorgang ergibt sich aufgrund der Symmetrie des Doppelkolbens in beiden Bewegungsrichtungen des Kolbens und funktioniert auch noch nach vielen Betriebsstunden zuverlässig.

## Patentansprüche

1. Handwerkzeug (10) mit einem pneumatisch betriebenen Linear-Schwingantrieb, der ein Motorengehäuse (18) und einen in dem Motorengehäuse (18) beweglichen Kolben (17) aufweist, der zwei Arbeitsräume (20, 22) des Motorengehäuses (18) voneinander trennt und der ein zu einem (20) der beiden Arbeitsräume (20, 22) weisendes Kolbenhemd (44) aufweist, mit einer Druckluftzuleitung zu dem Motorengehäuse (18) und einem Steuerschieber (36), der eine abwechselnd zu dem einen und dem anderen der beiden Arbeitsräume (20, 22) erfolgende Druckluftzufuhr steuert, und mit einer Abluftöffnung (38) im Motorengehäuse (18), wobei der Kolben (17) und das Motorengehäuse (18) aus metallischen Werkstoffen bestehen, und wobei eine Lauffläche des Kolbens (17) und/oder des Motorengehäuses (18) mit einem reibungsvermindernden Material beschichtet ist, oder wobei reibungsverminderndes Material in einen metallischen Werkstoff der Lauffläche des Kolbens (17) und/oder des Motorengehäuses (18) eingelagert ist, **dadurch gekennzeichnet, dass** der Kolben (17) zusätzlich ein zu dem anderen (20) der beiden Arbeitsräume (20, 22) weisendes Kolbenhemd (46) aufweist, wobei die Kolbenhemden (44, 46) in Bezug auf ihr Material und ihre Dimensionen so an den Betriebsdruck einer Druckluftversorgung des Handwerkzeugs (10) angepasst sind, dass sich die Kolbenhemden (44, 46) unter dem Einfluss der Druckluft elastisch aufweiten, und wobei den beiden Arbeitsräumen (20, 22) zugewandte Kolbenböden (48, 49) des Kolbens (17) konvex und so dünnwandig ausgestaltet sind, dass sie einen elastisch variablen Durchmesser aufweisen, so dass sich der Kolben Durchmesser nicht nur im Bereich einer Kolbentopföffnung, sondern auch zusätzlich im Bereich des Kolbenbodens dehnen kann.

2. Handwerkzeug (10) nach Anspruch 1, **dadurch gekennzeichnet, dass** ein Materialquerschnitt der Kolbenhemden (44, 46) kleiner als ein Materialquerschnitt eines Bodens (48, 49) des Kolbens (17) ist.

3. Handwerkzeug (10) nach Anspruch 1, **dadurch gekennzeichnet, dass** die metallischen Werkstoffe Leichtmetall aufweisen oder aus Leichtmetall bestehen.

4. Handwerkzeug (10) nach Anspruch 1, **gekennzeichnet durch** Aluminium als Leichtmetall.

5. Handwerkzeug (10) nach einem der Ansprüche 3 bis 4, **dadurch gekennzeichnet, dass** die Lauffläche hartkoatiert ist.

6. Handwerkzeug (10) nach Anspruch 1, **gekennzeichnet durch** Stahl als metallischen Werkstoff.

7. Handwerkzeug nach Anspruch 6, **gekennzeichnet durch** eine gehärtete Oberfläche.

8. Handwerkzeug (10) nach einem der vorhergehenden Ansprüche, **dadurch gekennzeichnet, dass** das Motorengehäuse (18) in einem Griffkörper (12) des Handwerkzeuges (10) in der Bewegungsrichtung des Kolbens (17) elastisch beweglich gelagert ist.

## Claims

1. Hand tool (10) comprising a pneumatically operated linear oscillating drive that has a motor housing (18) and a piston (17) that can move within the motor housing (18), separates two working chambers (20, 22) of the motor housing (18) from one another and has a piston skirt (44) that faces one chamber (20) of the two working chambers (20, 22), comprising a compressed air supply line to the motor housing (18) and a slide valve (36) which controls a supply of compressed air that supplies one and the other of the two working chambers (20, 22) alternately, and comprising an exhaust air opening (38) in the motor housing (18), the piston (17) and the motor housing (18) consisting of metal materials, and a bearing surface of the piston (17) and/or of the motor housing (18) being coated with a friction-reducing material, or friction-reducing material being embedded in a metal material of the bearing surface of the piston (17) and/or of the motor housing (18), **characterised in that** the piston (17) additionally comprises a piston skirt (46) that faces the other chamber (20) of the two working chambers (20, 22), the material and the dimensions of the piston skirts (44, 46) being adapted to the operating pressure of a compressed air supply of the hand tool (10) in such a way that the piston skirts (44, 46) expand resiliently under the influence of the compressed air, and the piston heads (48, 49) of the piston (17) facing the two working chambers (20, 22) being convex and so thin-walled that they have a resiliently variable diameter, and therefore the piston diameter can expand not only in the region of a piston crown opening, but also additionally in the region of the piston head.

2. Hand tool (10) according to claim 1, **characterised in that** a material cross section of the piston skirts (44, 46) is smaller than a material cross section of a head (48, 49) of the piston (17).

3. Hand tool (10) according to claim 1, **characterised in that** the metal materials comprise light metal or consist of light metal.

4. Hand tool (10) according to claim 1, **characterised by** aluminium as the light metal.

5. Hand tool (10) according to either claim 3 or claim 4, **characterised in that** the bearing surface is hard-coated.

6. Hand tool (10) according to claim 1, **characterised by** steel as the metal material.

7. Hand tool according to claim 6, **characterised by** a hardened surface.

8. Hand tool (10) according to any of the preceding claims, **characterised in that** the motor housing (18) is mounted in a hand-grip (12) of the hand tool (10) so as to be resiliently moveable in the direction of movement of the piston (17).

## Revendications

1. Outil à main (10) comportant un entraînement oscillant linéaire à commande pneumatique présentant un carter de moteur (18) et un piston (17) mobile dans le carter de moteur (18), lequel piston sépare deux espaces de travail (20, 22) du carter de moteur (18) et présente une chemise de piston (44) dirigée vers l'un (20) des deux espaces de travail (20, 22), une conduite d'alimentation en air comprimé vers le carter de moteur (18) et une coulisse de commande (36) qui commande une alimentation en air comprimé alternativement vers l'un et l'autre des deux espaces de travail (20, 22), et un orifice d'évacuation d'air (38) dans le carter de moteur (18), le piston (17) et le carter de moteur (18) étant constitués de matières métalliques, et une surface de roulement du piston (17) et/ou du carter de moteur (18) étant revêtue d'une matière réduisant les frottements, ou une matière réduisant les frottements étant incorporée dans une matière métallique de la surface de roulement du piston (17) et/ou du carter de moteur (18), **caractérisé en ce que** le piston (17) présente, en plus, une chemise de piston (46) dirigée vers l'autre (20) des deux espaces de travail (20, 22), les chemises de piston (44, 46) étant adaptées, au niveau de leur matière et de leurs dimensions, à la pression de service d'une alimentation en air comprimé de l'outil à main (10) de telle manière que les chemises de piston (44, 46) s'élargissent de manière élastique sous l'action de l'air comprimé et les deux têtes (48, 49) du piston (17), dirigées vers les deux espaces de travail (20, 22) sont convexes et ont des parois minces de manière à présenter un diamètre variable de manière élastique de sorte que le diamètre du piston ne se dilate pas seulement au niveau d'une ouverture de piston mais aussi, en plus, au niveau de la tête de piston.

2. Outil à main (10) selon la revendication 1, **caractérisé en ce qu'**une section de la matière des chemises de piston (44, 46) est inférieure à celle d'une tête (48, 49) du piston (17) .

3. Outil à main (10) selon la revendication 1, **caractérisé en ce que** les matières métalliques présentent un métal léger ou sont constituées d'un métal léger.

4. Outil à main (10) selon la revendication 1, **caractérisé en ce que** le métal léger est de l'aluminium.

5. Outil à main (10) selon l'une quelconque des revendications 3 à 4, **caractérisé en ce que** la surface de roulement a un revêtement dur.

6. Outil à main (10) selon la revendication 1, **caractérisé en ce que** la matière métallique est de l'acier.

7. Outil à main (10) selon la revendication 6, **caractérisé par** une surface trempée.

8. Outil à main (10) selon l'une quelconque des revendications précédentes, **caractérisé en ce que** le carter de moteur (18) est positionné de manière mobile et élastique dans un organe de préhension (12) de l'outil à main (10) dans le sens de déplacement du piston (17).
